# EUROPEAN PATENT APPLICATION

(11) **EP 4 393 677 A1**
(43) Date of publication of application: **03.07.2024**
(21) Application number: 23210872.0
(22) Date of filing: 20.11.2023
(51) Int. Cl.: B29C 48/10, B29C 48/88, B29C 48/885, B29C 55/28

(54) **INFLATION MOLDING DEVICE**

(30) Priority: 27.12.2022 JP 2022209447
(71) Applicant: Sumitomo Heavy Industries, Ltd., Tokyo 141-6025 (JP)
(72) Inventor: HIOKI, Kazuya, Kanagawa, 237-8555, (JP)
(74) Representative: Louis Pöhlau Lohrentz

(57) **Abstract**

In an inflation molding device (1, 5, 6), a chamber (11, 81, 112, 113, 114, 115) with a non-uniform shape in a circumferential direction can be used. The inflation molding device (1, 5, 6) includes an air ring (20) that blows cooling air (610) for solidifying a bubble (510) formed by expansion of a molten resin (500) extruded in a cylindrical shape from a die (30); and a chamber (11, 81, 112, 113, 114, 115) that is disposed to surround the bubble (510), and guides the cooling air (610) from the blowing portion (20) to the bubble (510), in which the chamber (11, 81, 112, 113, 114, 115) is divided to enable assembly and disassembly and rotates or reciprocates in the circumferential direction.

## Description

### BACKGROUND OF THE INVENTION

### Field of the Invention

The present invention relates to an inflation molding device.

### Description of Related Art

In so-called inflation molding, air is sent into an inner surface side of a molten resin extruded in a cylindrical shape from a die and the molten resin expands, thereby forming a thin film of molten resin, also called a "bubble". Then, a film is molded as a product by causing cooling air to hit an outer surface side of the bubble to solidify the bubble. In the inflation molding, it is preferable that a wind speed of the cooling air hitting the outer surface side of the bubble is uniform. In a case where the wind speed of the cooling air is not uniform, a film thickness of the bubble is non-uniform, and the quality of the film as a product deteriorates. For this reason, a cylindrical wall, also called a "chamber", is disposed to surround the bubble, and cooling air from a blower device, also called an "air ring", is guided to hit the outer surface side of the bubble (for example, Japanese Unexamined Patent Publication No. H6-122150). Accordingly, the wind speed of the cooling air is made uniform.

### SUMMARY OF THE INVENTION

Using a chamber with a non-uniform shape in a circumferential direction results in non-uniform spacing between the bubble and the chamber. As a result, the wind speed of the cooling air is non-uniform, and thus, the film thickness of the bubble becomes non-uniform. For this reason, a chamber with a non-uniform shape in the circumferential direction cannot be used, and an expensive chamber with high roundness has been used.

An object of the present invention is to enable use of a chamber with a non-uniform shape in the circumferential direction in an inflation molding device.

The present invention that has been completed for the object is an inflation molding device including a blowing portion that blows cooling air for solidifying a bubble formed by expansion of a molten resin extruded in a cylindrical shape from a die; and a guiding portion that is disposed to surround the bubble, and guides the cooling air from the blowing portion to the bubble, in which the guiding portion is divided into a plurality of members in a circumferential direction, and rotates or reciprocates in the circumferential direction.

Here, a surface of each of the plurality of members of the guiding portion, which faces the bubble, may include a curved surface in the circumferential direction.

Further, a surface of each of the plurality of members of the guiding portion, which faces the bubble, may be a flat surface.

Further, the plurality of members of the guiding portion may be a plurality of flat plates, and a widest surface of each of the plurality of flat plates may be perpendicular to the circumferential direction.

Further, each of the plurality of members of the guiding portion may include a curved surface in an axial direction on a surface facing the bubble.

Further, the plurality of members of the guiding portion may be divided in an axial direction.

Further, one or more members among the plurality of members may include a mechanism that moves in a radial direction.

Further, each of the plurality of members of the guiding portion may include a curved surface in an axial direction.

Further, a mechanism that moves some of the members further divided in the axial direction, in the axial direction may be provided.

Further, a rotation portion that includes a rotation member that supports the guiding portion, and causes the guiding portion to rotate or reciprocate in the circumferential direction may be provided.

Further, the rotation portion may include one or more drive mechanisms that are in contact with an edge portion of the rotation member and rotate the rotation member.

Further, the rotation member may be provided with an outlet through which at least some of the cooling air is blown out from the blowing portion.

According to the present invention, it is possible to use a chamber with a non-uniform shape in the circumferential direction in an inflation molding device.

### BRIEF DESCRIPTION OF THE DRAWINGS

Fig. 1 is a sectional view illustrating an example of a partial configuration of an inflation molding device according to a first embodiment.
Fig. 2 is a diagram illustrating an example of a configuration of a chamber that is divided in a radial direction and has a substantially cylindrical shape when assembled.
Fig. 3 is a perspective view illustrating an example of an external configuration of a rotation mechanism that causes a chamber to rotate or reciprocate in a circumferential direction.
Fig. 4 is a diagram illustrating a specific example of a method of rotating a drive mechanism of Fig. 3, and is an enlarged view illustrating an example of a partial configuration of the inflation molding device of Fig. 1.
Figs. 5A to 5C are diagrams illustrating examples of configurations of an inflation molding device according to a second embodiment.
Figs. 6A and 6B are diagrams illustrating examples of a configuration of a chamber of an inflation molding device according to a third embodiment.
Figs. 7A and 7B are diagrams illustrating examples of a configuration of a chamber of an inflation molding device according to a fourth embodiment.
Figs. 8A to 8C are diagrams illustrating examples of configurations of an inflation molding device according to a fifth embodiment.
Fig. 9 is an enlarged sectional view illustrating a part of a configuration of an inflation molding device according to a sixth embodiment.
Fig. 10 is a plan view illustrating a part of an external configuration of a rotation mechanism of an inflation molding device according to a seventh embodiment.
Fig. 11 is a diagram illustrating an example of a configuration of a chamber that is divided in an axial direction to allow assembly and disassembly.
Figs. 12A and 12B are perspective views illustrating examples of a configuration of a chamber that has curved surfaces in the circumferential direction and the axial direction, and that is divided in a radial direction to allow assembly and disassembly.
Figs. 13A and 13B are front views illustrating examples of an external configuration of a chamber that has a slide mechanism for adjusting a height in the axial direction.

### DETAILED DESCRIPTION OF THE INVENTION

Hereinafter, embodiments of the present invention will be described in detail with reference to the accompanying drawings.

### <First Embodiment>

### [Configuration of Inflation Molding Device]

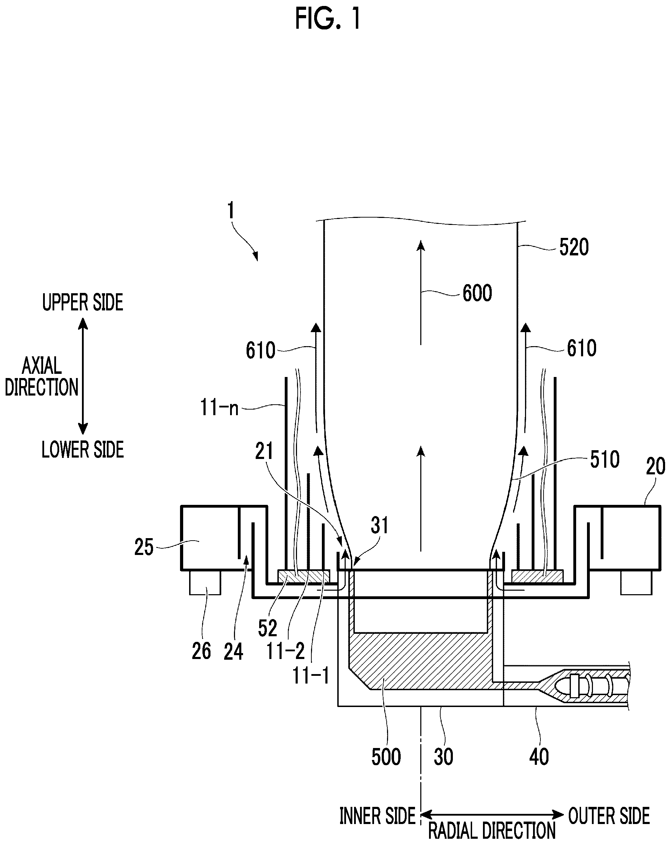

Fig. 1 is a sectional view illustrating an example of a partial configuration of an inflation molding device 1 according to a first embodiment.

In the inflation molding device 1, as a partial process, an extrusion device 40 extrudes a resin 500 that is in a molten state by heating (hereinafter, referred to as "molten resin 500"), toward an annular die 30 that is a base. Then, the molten resin 500 becomes cylindrical, and is discharged from a discharge port 31 of the die 30. In a case where air 600 is sent toward the molten resin 500 from the inner side of the die 30, the molten resin 500 expands, and a tube-shaped thin film of molten resin 510 (hereinafter, referred to as "bubble 510") is formed.

Next, cooling air 610 from an air ring 20, which is a blowing portion that blows out air for cooling the bubble 510, flows along an outer surface of the bubble 510 while being guided to chambers 11-1 to 11-n (n is an integer value of 3 or more), which are guiding portions. That is, the cooling air 610 flows from a lower side (hereinafter, sometimes simply referred to as "lower side") of a center axis of the bubble 510 in the axial direction (hereinafter, simply referred to as "axial direction") toward an upper side (hereinafter, sometimes simply referred to as "upper side") in the axial direction. Here, the upper side refers to a downstream side in terms of a direction in which the bubble 510 flows, and the lower side refers to an upstream side in terms of the direction in which the bubble 510 flows.

The chambers 11-1 to 11-n are supported by a rotation member 52, and in a case where the rotation member 52 rotates or reciprocates in the circumferential direction of the bubble 510, the chambers 11-1 to 11-n rotate or reciprocate accordingly. The term "reciprocating or reciprocating motion" refers to, for example, a motion of reciprocating in a range of a half of the circumference or a motion of reciprocating in a range of a quarter of the circumference. In a case where the plurality of chambers 11-1 to 11-n rotate or reciprocate in the circumferential direction, the wind speed of the cooling air 610 blown out from an outlet 21 is made uniform in the circumferential direction, so that the film thickness of the bubble becomes uniform.

The bubble 510 is solidified by being cooled by the cooling air 610. Accordingly, a resin film 520, also called a "tube film", is molded. In the inflation molding device 1, in a case where the film 520 is molded, a tightening roll device (not illustrated) pinches the film 520, and takes the film 520 out while excluding the air inside. Thereafter, a winding device (not illustrated) winds up the film 520, and the film 520 is cut into a predetermined length using a heater or a cutter.

The center axis of each of the chambers 11-1 to 11-n, the air ring 20, the die 30, the rotation member 52, and the film 520 is coaxial or approximately coaxial with the center axis of the bubble 510. Hereinafter, a direction indicating the diameters of the chambers 11-1 to 11-n, the air ring 20, the die 30, the rotation member 52, the bubble 510, and the film 520 may be referred to as a "radial direction." Furthermore, in a case where the direction is referred to as the radial direction, a direction toward the center axis is referred to as an "inner side", and a direction away from the center axis is referred to as an "outer side."

### (Configuration of Chamber)

The chambers 11-1 to 11-n as the guiding portions are cylindrical walls formed of one or a plurality of layers disposed to surround the outlet 21, and guide the cooling air 610 blown out from the outlet 21. That is, Fig. 1 illustrates that the chambers are formed of three or more layers, but the chambers may be formed of two layers or one layer. In the example of Fig. 1, the chamber 11-1 is disposed to surround the outlet 21, and the chamber 11-2 is disposed to surround the chamber 11-1. Further, the chamber 11-n is disposed to surround the chambers 11-1 to 11-(n - 1). Hereinafter, unless it is necessary to describe each of the chambers 11-1 to 11-n individually, the chambers 11-1 to 11-n will be collectively referred to as "chamber 11".

### (Configuration of Air Ring)

The air ring 20 as the blowing portion includes the outlet 21 through which the cooling air 610 is blown out, a ventilation path 24 through which the air sent into the outlet 21 as the cooling air 610 passes, a space 25 where air taken into from the outside is temporarily stored, and a duct 26 that takes into air from the outside. That is, air taken into the duct 26 from the outside passes through the space 25 and the ventilation path 24, and is blown out from the outlet 21 as the cooling air 610.

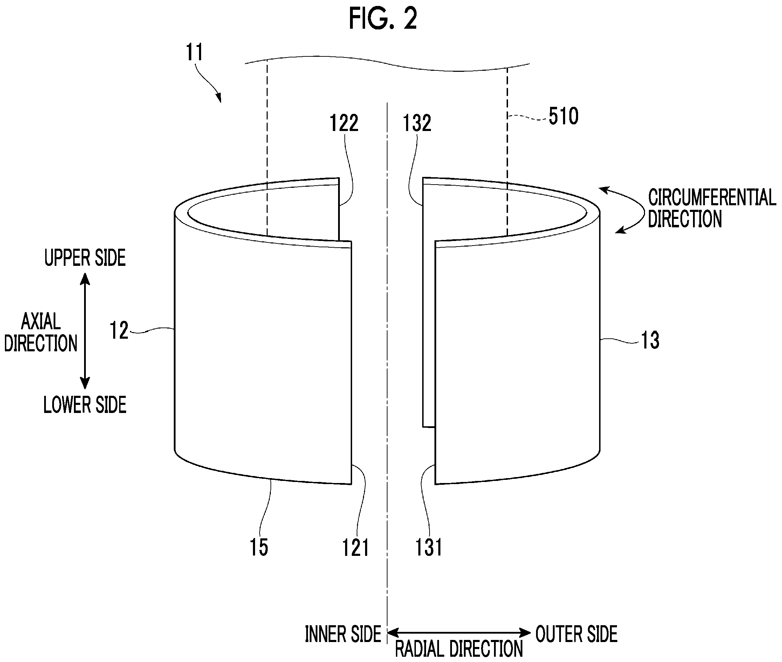

Fig. 2 is a diagram illustrating an example of a configuration of the chamber 11 that is divided in a radial direction and has a substantially cylindrical shape when assembled. The reason for the substantially cylindrical shape here is that when a member 12 and a member 13 are assembled as the chamber 11, the position in the radial direction and/or circumferential direction can be adjusted, and as a result of adjusting the position, the shape of the cylinder may differ from a perfect circle.

Fig. 2 illustrates the member 12 and the member 13 that have the same or substantially the same shape. One chamber 11 is formed by assembling the member 12 and the member 13. In a case where the member 12 and the member 13 are assembled, a surface 121 of the member 12, which is parallel to the axial direction, and a surface 131 of the member 13, which is parallel to the axial direction, are joined, and a surface 122 of the member 12, which is parallel to the axial direction, and a surface 132 of the member 13, which is parallel to the axial direction, are joined. Accordingly, the chamber 11 formed of one layer is formed.

Since the chamber 11 of Fig. 2 can be a cylindrical chamber by being divided in the radial direction and assembled, the removal and attachment of the inflation molding device 1 in the radial direction is facilitated. As a result, even in a case where it is necessary to replace the chamber 11, for example, in a case of setting molding conditions, the chamber can be moved in the radial direction at the time of disassembly and assembly, and the removal of the bubble 510 from the inflation molding device 1 or the adjustment of the position or the like can be performed without stopping the molding.

Note that Fig. 2 illustrates that the chamber 11 formed of one layer is divided in the radial direction, but this is merely an example. For example, in a case where a plurality of layers such as the chambers 11-1 to 11-n of Fig. 1 are formed, all of the chambers 11-1 to 11-n can be divided in the radial direction and assembled.

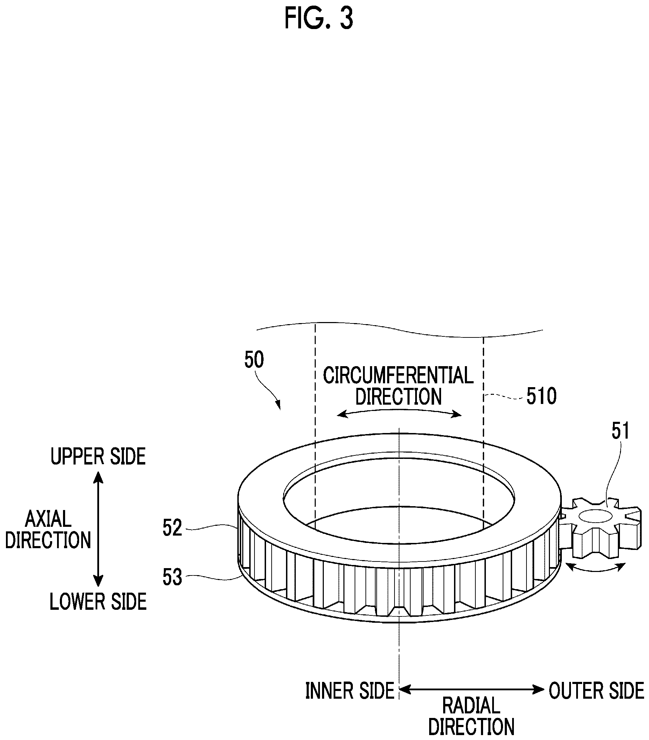

Fig. 3 is a perspective view illustrating an example of an external configuration of a rotation mechanism 50 that causes the chambers 11-1 to 11-n to rotate or reciprocate in the circumferential direction.

The rotation mechanism 50 as a rotation portion includes a drive mechanism 51 and the rotation member 52 that have gear teeth, and a bearing 53. The drive mechanism 51 is rotated while meshing with the rotation member 52, thereby rotating the rotation member 52. Note that the sizes of the gear teeth of the drive mechanism 51 and the rotation member 52 illustrated in Fig. 3 are merely examples. For example, the size of the teeth may be smaller than the size illustrated in Fig. 3. The drive mechanism 51 is rotated by, for example, a motor. The number of drive mechanisms 51 is not particularly limited, and is determined depending on molding conditions and the like. Note that Fig. 3 illustrates an example in which one drive mechanism 51 is provided.

The rotation member 52 rotates or reciprocates in the circumferential direction while coaxially supporting the chambers 11-1 to 11-n, thereby causing the chambers 11-1 to 11-n to rotate or reciprocate in the circumferential direction. The chambers 11-1 to 11-n and the rotation member 52 are joined in a removable manner. For example, the chambers and the rotation member may be joined using an angle or the like. The rotation speed of the rotation member 52 is not particularly limited, and is determined depending on molding conditions and the like. For example, the rotation speed is determined as one rotation in 20 seconds, and one rotation in one minute. The bearing 53 is configured by a thrust bearing or the like, coaxially supports the rotation member 52, and receives a force acting on the lower side of the rotation member 52 in the axial direction. By providing the bearing 53, the rotation or reciprocation of the rotation member 52 becomes smooth.

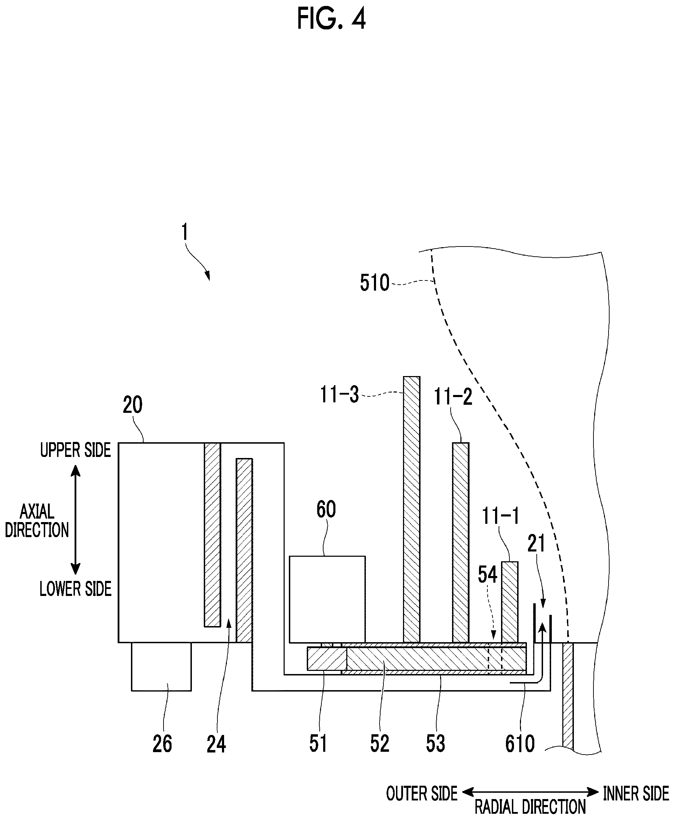

Fig. 4 is a diagram illustrating a specific example of a method of rotating the drive mechanism 51 of Fig. 3, and is an enlarged view illustrating an example of a partial configuration of the inflation molding device 1 of Fig. 1. Note that, in the example of Fig. 4, the chambers 11-1 to 11-3 formed of three layers rotate or reciprocate in the circumferential direction, thereby making the wind speed of the cooling air 610 from the air ring 20 uniform in the circumferential direction. Accordingly, even in a case where the chamber 11 has a non-uniform shape in the circumferential direction, such as a divided structure, the influence of the non-uniform wind speed of the cooling air 610 can be dispersed in the circumferential direction so that the distribution of the film thickness of the bubble 510 is not adversely affected.

As illustrated in Fig. 4, the inflation molding device 1 has a configuration in which the bubble 510, the outlet 21, the chambers 11-1 to 11-3, a motor 60, and the main body of the air ring 20 are disposed in this order from the inner side to the outer side in the radial direction. Therefore, the air taken into from the duct 26 passes through the ventilation path 24, and is blown out from the outlet 21 as the cooling air 610.

In the example of Fig. 4, the motor 60 is disposed in a space formed between the chamber 11-3 and the air ring 20. In a case where the motor 60 rotates the drive mechanism 51, the rotation member 52 supported by the bearing 53 rotates or reciprocates in the circumferential direction. Further, at the same time, the chambers 11-1 to 11-3 supported by the rotation member 52 rotate or reciprocate in the circumferential direction. Accordingly, the wind speed of the cooling air 610 blown out from the outlet 21 of the air ring 20 is made uniform in the circumferential direction, so that the film thickness of the bubble 510 can be made uniform.

As illustrated in Fig. 4, a hole that communicates with the ventilation path 24 from the rotation member 52 may be provided, and this communication hole may be used as an outlet 54 through which the cooling air 610 is blown out. Accordingly, the cooling air 610 can be blown out not only from the outlet 21 but also from the outlet 54, for example, and thus, it is possible to control the position from which the cooling air 610 is blown out.

The outlet 54 is formed in at least a portion of the rotation member 52 in the circumferential direction. That is, the outlet 54 may be formed in the entire range of the rotation member 52 in the circumferential direction, or may be formed in a partial range of the rotation member 52 in the circumferential direction. In a case where the outlet 54 is molded in a partial range of the rotation member 52 in the circumferential direction, the position and range from which the cooling air 610 is blown out can be controlled.

### <Second Embodiment>

The chamber 11 of the inflation molding device 1 according to the first embodiment described above is a chamber that is divided in the circumferential direction and has a substantially cylindrical shape when assembled, and that is composed of walls having curved surfaces in the circumferential direction. On the other hand, a chamber of an inflation molding device according to a second embodiment is a rectangular cylindrical chamber formed of a combination of a plurality of flat plates. That is, the chamber has a polygonal shape when viewed from the axial direction. Similarly to the chamber 11 according to the first embodiment, the chamber according to the second embodiment is supported by the rotation member 52 (for example, refer to Fig. 3) to enable the rotation and the reciprocating motion.

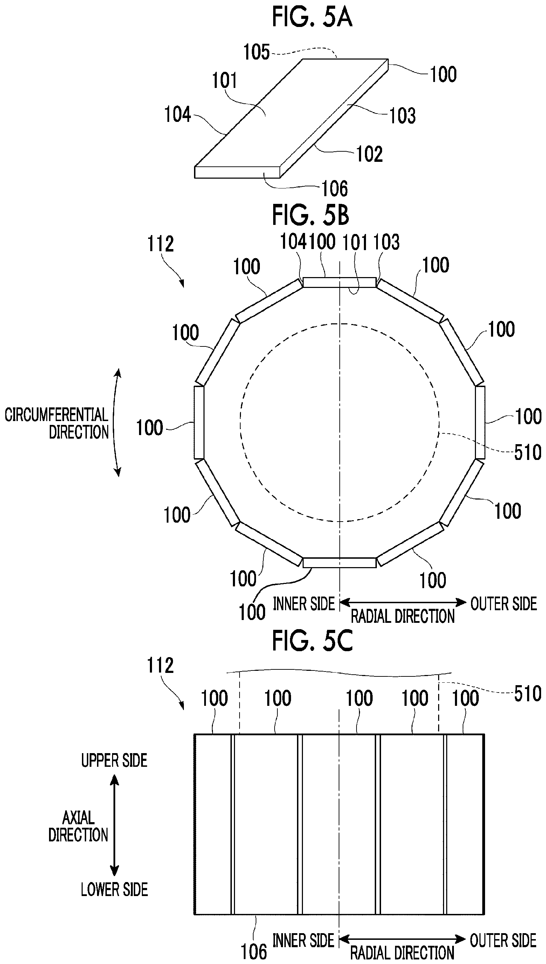

Figs. 5A to 5C are diagrams illustrating examples of configurations of the inflation molding device according to the second embodiment.

A flat plate 100 illustrated in Fig. 5A is a rectangular flat plate having a longitudinal direction and a lateral direction, and has surfaces 101 to 106 that are flat surfaces. Fig. 5B illustrates a plan view illustrating an example of an external configuration of a chamber 112 formed by combining the flat plates 100 of Fig. 5A. Fig. 5C illustrates a front view illustrating an example of the external configuration of the chamber 112 of Fig. 5B.

As illustrated in Figs. 5B and 5C, the rectangular cylindrical chamber 112 can be assembled by removably joining portions of the surfaces 103 and 104 of adjacent flat plates 100 in the longitudinal direction. The method of joining portions of the surfaces 103 and 104 is not particularly limited, and for example, the portions of the surfaces 103 and 104 may be joined using a hinge or the like. The surface 106 of the flat plate 100, which constitutes a lower end portion of the chamber 112, is joined to the rotation member 52 (for example, refer to Fig. 3). Accordingly, the chamber 112 can rotate or reciprocate in the circumferential direction.

Since all six surfaces of the plurality of flat plates 100 constituting the chamber 112 are flat surfaces, the surface 101 facing the bubble 510 is also flat surface. Therefore, the surface of the chamber 112 as a whole facing the bubble 510 has a shape that does not have a curve. However, by rotating the chamber 112, the wind speed of the cooling air 610 flowing on the outer surface side of the bubble 510 can be made uniform in the circumferential direction. Accordingly, the film thickness of the bubble can be made uniform. Furthermore, by using the flat plate 100 as a member constituting the chamber 112, procurement and processing become easier.

### <Third Embodiment>

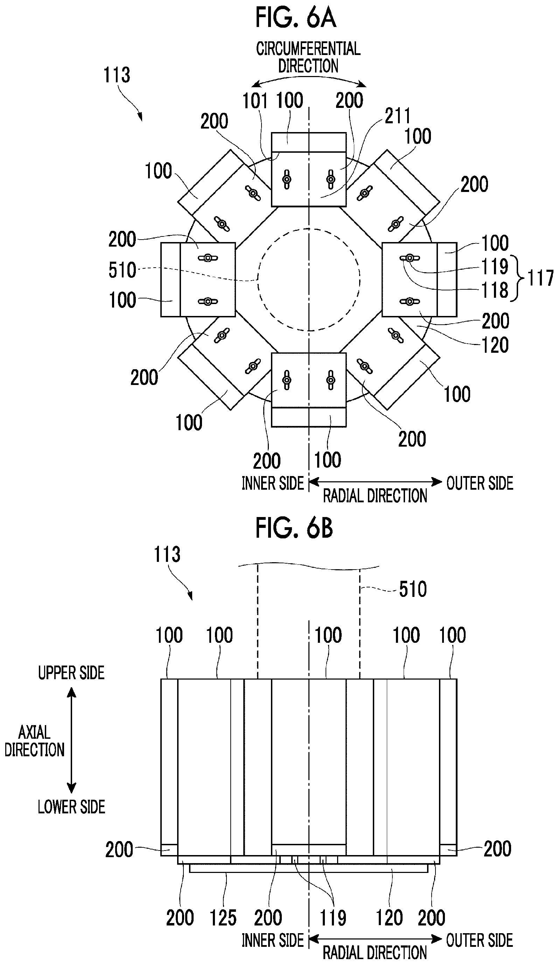

Figs. 6A and 6B are diagrams illustrating examples of a configuration of a chamber 113 of an inflation molding device according to a third embodiment.

Fig. 6A illustrates a plan view illustrating an example of an external configuration of the chamber 113 having a slide mechanism for adjusting the position in the radial direction. Fig. 6B illustrates a front view illustrating an example of the external configuration of the chamber 113 of Fig. 6A.

By providing a slide mechanism 117 for sliding in the radial direction on a flat plate 200 that is joined to the flat plate 100 constituting the chamber 113 such that the flat plate 200 and the flat plate 100 are perpendicular to each other, the shape of the chamber 113 in the circumferential direction can be adjusted for each flat plate 100. Accordingly, it is possible to adjust the distance between the chamber 113 and the bubble 510 for each flat plate 100.

Specifically, as illustrated in Figs. 6A and 6B, the rectangular flat plate 200 having the slide mechanism 117 is joined to the flat plate 100 such that the flat plate 200 and the flat plate 100 are perpendicular to each other, and a plurality of combinations thereof are disposed in the circumferential direction. In this case, portions of adjacent flat plates 200 are disposed so as to overlap alternately. By doing so, the substantially cylindrical chamber 113 is formed in which a long gap is formed in the axial direction between adjacent flat plates 100. Note that the method of joining the flat plate 100 and the flat plate 200 such that the flat plate 100 and the flat plate 200 are perpendicular to each other is not particularly limited. For example, the flat plates may be joined by welding, angles, or the like. In the chamber 113, one surface 101 of the flat plate 100 faces the bubble 510, and one surface 211 of the flat plate 200 is disposed to be perpendicular to the axial direction.

The slide mechanism 117 includes a slide hole 118 as a hole that is long in the radial direction, and a stopper 119. The stopper 119 is joined to an annular plate 120 disposed on the lower side in the axial direction, via the slide hole 118. The width over which the flat plate 100 can slide in the radial direction is not particularly limited, and is approximately 20 cm (centimeter), for example, but may be determined depending on the size of the chamber and the number of divisions.

A lower end portion 125 of the chamber 113 is joined to the rotation member 52 (for example, refer to Fig. 3). Accordingly, the chamber 113 can rotate or reciprocate in the circumferential direction. Since all six surfaces of the plurality of flat plates 100 constituting the chamber 113 are flat surfaces, one surface 101 facing the bubble 510 is also a flat surface. Further, a gap is formed between adjacent flat plates 100. However, by rotating the chamber 113, the wind speed of the cooling air 610 flowing on the outer surface side of the bubble 510 can be made uniform in the circumferential direction. Accordingly, the film thickness of the bubble can be made uniform.

### <Fourth Embodiment>

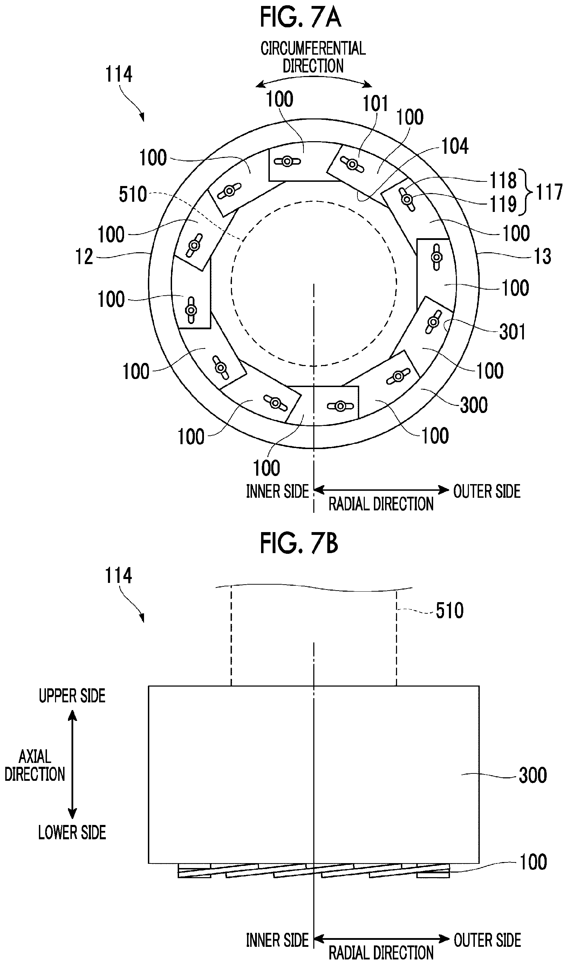

Figs. 7A and 7B are diagrams illustrating examples of a configuration of a chamber 114 of an inflation molding device according to a fourth embodiment.

Fig. 7A illustrates a plan view illustrating an example of an external configuration of the chamber 114 having a slide mechanism for adjusting the position in the circumferential direction. Fig. 7B illustrates a front view illustrating an example of the external configuration of the chamber 114 of Fig. 7A.

By providing the slide mechanism 117 for sliding in the circumferential direction on the flat plate 100 constituting the chamber 114, the position of the chamber 114 in the circumferential direction can be adjusted. Accordingly, it is possible to adjust the position according to the shape of the chamber 114 in the circumferential direction.

Specifically, as illustrated in Figs. 7A and 7B, the plurality of flat plates 100 are disposed in the circumferential direction such that one surface 101 of the flat plate 100 is substantially perpendicular to the axial direction and one surface 104 of the flat plate 100 faces the bubble 510. In this case, the flat plates 100 are disposed such that portions of adjacent flat plates 100 overlap in the same direction. Then, a cylindrical wall 300 is placed on the upper side thereof and joined. In the chamber 114, an inner wall surface 301 of the cylindrical wall 300 and one surface 104 of the flat plate 100 are disposed to face the bubble 510.

The slide mechanism 117 is provided on the flat plate 100. The slide mechanism 117 includes the slide hole 118 as a hole that is long approximately in the circumferential direction, and the stopper 119. The stopper 119 is joined to the adjacent flat plate 100 disposed on the lower side in the axial direction, via the slide hole 118. The width over which the flat plate 100 can slide in the circumferential direction is not particularly limited, and is approximately 20 cm (centimeter), for example, but may be determined depending on the size of the chamber and the number of divisions.

### <Fifth Embodiment>

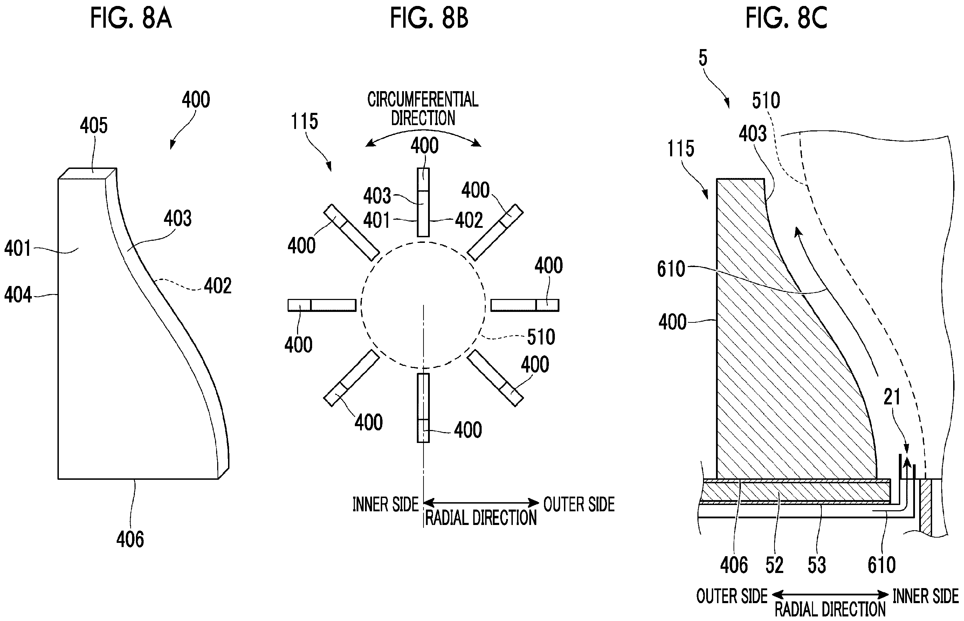

Figs. 8A to 8C are diagrams illustrating examples of configurations of an inflation molding device 5 according to a fifth embodiment.

A chamber 115 of the inflation molding device 5 according to the fifth embodiment is a chamber formed by combining flat plates 400 having at least a partially curved surface. The chamber 115 according to the fifth embodiment is supported by the rotation member 52 (for example, refer to Fig. 3) to enable the rotation and the reciprocating motion.

Fig. 8A illustrates a perspective view illustrating an example of an external configuration of the flat plate 400 that constitutes the chamber 115 of the inflation molding device 5 according to the fifth embodiment. Fig. 8B illustrates a plan view illustrating an example of the external configuration of the chamber 115 in which a plurality of flat plates 400 of Fig. 8A are disposed. Fig. 8C illustrates an enlarged sectional view illustrating an example of the configuration of the chamber 115 of Fig. 8B.

As illustrated in Figs. 8A and 8B, the flat plate 400 has surfaces 401, 402, and 404 to 406 that are flat surfaces, and a surface 403 that has a curved surface.

As illustrated in Fig. 8B, the surface 403, which has a curved surface in the axial direction, of the flat plate 400 constituting the chamber 115 is disposed on the inner side in the radial direction, that is, on an edge facing the bubble. Accordingly, the bubble 510 can be guided according to the shape of the curved surface of the surface 403. As a result, in order to form the curved surface on the inner side in the radial direction, it is no longer necessary to dispose a plurality of cylindrical members, which have different heights in the axial direction, in the radial direction as in the case in the related art. Further, the flat plate 400 is disposed such that the surface 401 and the surface 402 are perpendicular to the circumferential direction. Therefore, the chamber 115 as a whole has a shape in which flat plates 400 are disposed radially.

Further, as illustrated in Fig. 8C, the surface 406 of the flat plate 400 constituting the chamber 115 is joined to the rotation member 52. Accordingly, the chamber 115 can rotate or reciprocate in the circumferential direction. In a case where the chamber 115 rotates or reciprocates, the cooling air 610 blown out from the outlet 21 is discharged outward in the radial direction from between the adjacent flat plates 400. Accordingly, the effect of guiding the bubble 510 toward the chamber 115 and the effect of cooling the bubble 510 through heat radiation are improved. However, in a case where the cooling air 610 is discharged outward in the radial direction, there is a risk that it is difficult for the cooling air 610 to hit the bubble 510. Therefore, the balance between the rotation speed of the chamber 115 in the circumferential direction and the wind speed of the cooling air 610 blown out from the outlet 21 is taken into consideration.

### <Sixth Embodiment>

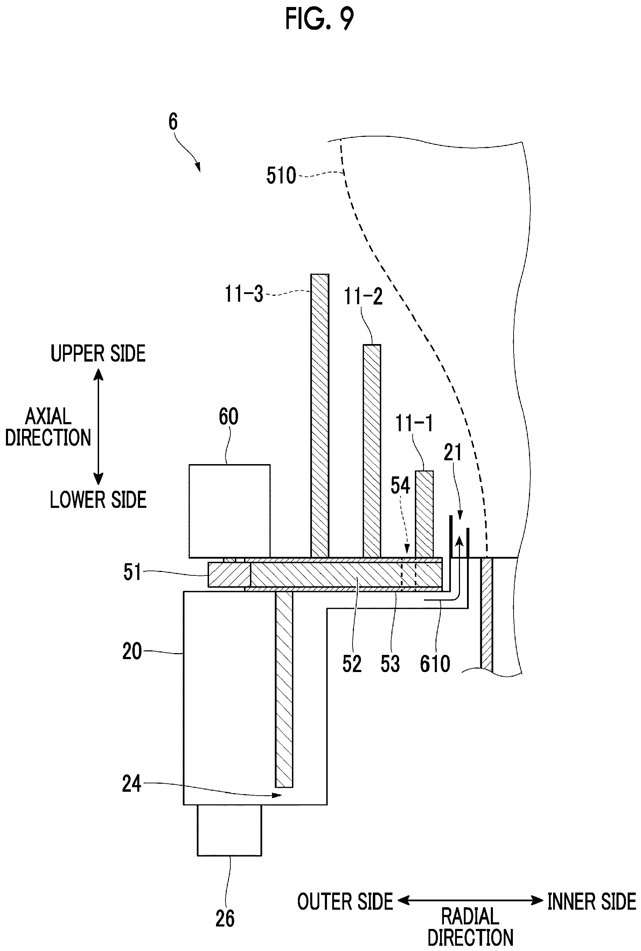

Fig. 9 is an enlarged sectional view illustrating a part of a configuration of an inflation molding device 6 according to a sixth embodiment.

For example, as illustrated in Fig. 4, the air ring 20 of the inflation molding device 1 according to the embodiment described above is disposed on the outer side of the bubble 510, the chambers 11-1 to 11-3, and the motor 60 that are disposed from the inner side to the outer side in the radial direction. On the other hand, as illustrated in Fig. 9, the air ring 20 of the inflation molding device 6 according to the sixth embodiment is disposed on the lower side of the chambers 11-1 to 11-3 and the motor 60 in the axial direction.

By adopting the configuration illustrated in Fig. 9, it is possible to prevent the air ring 20 from being present outside the chambers 11-1 to 11-3. Accordingly, work for replacing or adjusting the chambers 11-1 to 11-3 is easily performed. Further, since the width of the inflation molding device 6 in the radial direction is shortened, it is possible to save space.

Note that even in a case where the air ring 20 is disposed at the position illustrated in Fig. 9, the air taken into from the duct 26 passes through the ventilation path 24 and is blown out from the outlet 21 as the cooling air 610, as in the case of Fig. 4 described above.

As illustrated in Fig. 9, a hole that communicates with the ventilation path 24 from the rotation member 52 may be provided, and this communication hole may be used as the outlet 54 through which the cooling air 610 is blown out. Accordingly, the cooling air 610 can be blown out not only from the outlet 21 but also from the outlet 54, for example, and thus, it is possible to control the position from which the cooling air 610 is blown out.

### <Seventh Embodiment>

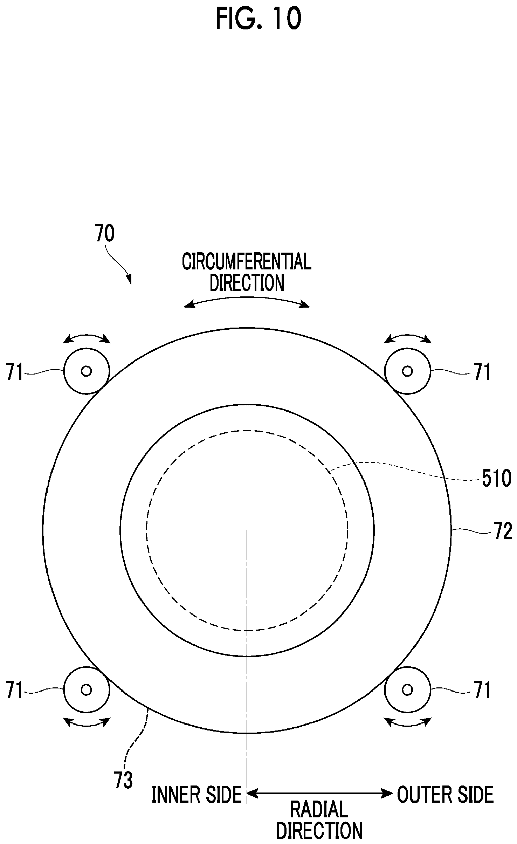

Fig. 10 is a plan view illustrating a part of an external configuration of a rotation mechanism 70 of an inflation molding device according to a seventh embodiment.

The rotation mechanism of the inflation molding device according to the embodiment described above includes, for example, the drive mechanism 51 and the rotation member 52 that have gear teeth, and the bearing 53 as illustrated in Fig. 3 described above. On the other hand, the rotation mechanism 70 of the inflation molding device according to the seventh embodiment includes a drive mechanism 71 that is a tire-shaped (having a cavity at the center) rotating body, a rotation member 72, and a bearing 73, as illustrated in Fig. 10.

An outer edge portion of the drive mechanism 71 is formed of an elastic body such as rubber, and in a case where the drive mechanism 71 rotates in a state of being in contact with the rotation member 72, a friction force is generated to cause the rotation member 72 to rotate or reciprocate in the circumferential direction. The drive mechanism 71 is rotated by, for example, a motor. The number of drive mechanisms 71 is not particularly limited, and is determined depending on molding conditions and the like. Note that Fig. 10 illustrates an example in which four drive mechanisms 71 are provided.

The rotation member 72 is an annular plate that rotates or reciprocates in the circumferential direction while coaxially supporting the chambers 11-1 to 11-n, and causes the chambers 11-1 to 11-n to rotate or reciprocate in the circumferential direction. The rotation speed of the rotation member 72 is not particularly limited, and is determined depending on molding conditions and the like. The bearing 73 is a bearing configured by a thrust bearing or the like, similar to the bearing 53 of Fig. 3 described above.

### <Modification Example 1>

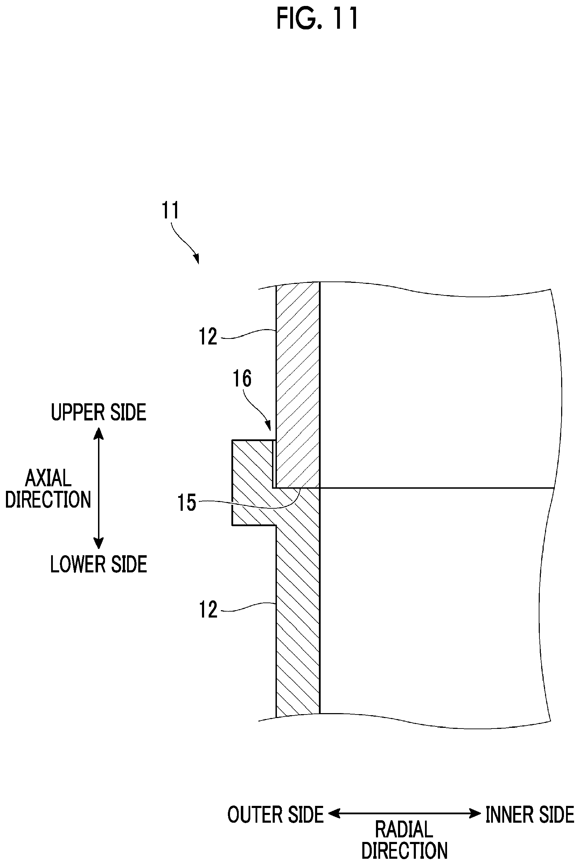

Fig. 11 is a diagram illustrating an example of a configuration of the chamber 11 that is divided in an axial direction to allow assembly and disassembly.

For example, the cylindrical chamber 11 in Fig. 2 described above can be divided in the circumferential direction and be moved in the radial direction for assembly and disassembly, but the chamber 11 may further be divided in the axial direction to allow assembly and disassembly. In a case where the chamber 11 is divided in the axial direction to allow assembly and disassembly, the chambers 11 can be stacked in the axial direction, and the stacked chambers 11 can be removed. Accordingly, the height of the chamber 11 in the axial direction can be adjusted. For example, by providing a variation in the height of the chamber 11, the height can be adjusted in units of, for example, 1 cm (centimeter).

Fig. 11 illustrates a joint portion when the members 12 constituting the chamber 11 of Fig. 2 are stacked in the axial direction. In Fig. 11, a fitting portion 16 that fits with a lower end portion 15 of the member 12 positioned on the upper side in the axial direction is formed at an upper end portion of the member 12 positioned on the lower side in the axial direction. Accordingly, the member 12 positioned on the lower side in the axial direction and the member 12 positioned on the upper side in the axial direction are prevented from shifting in the radial direction.

### <Modification Example 2>

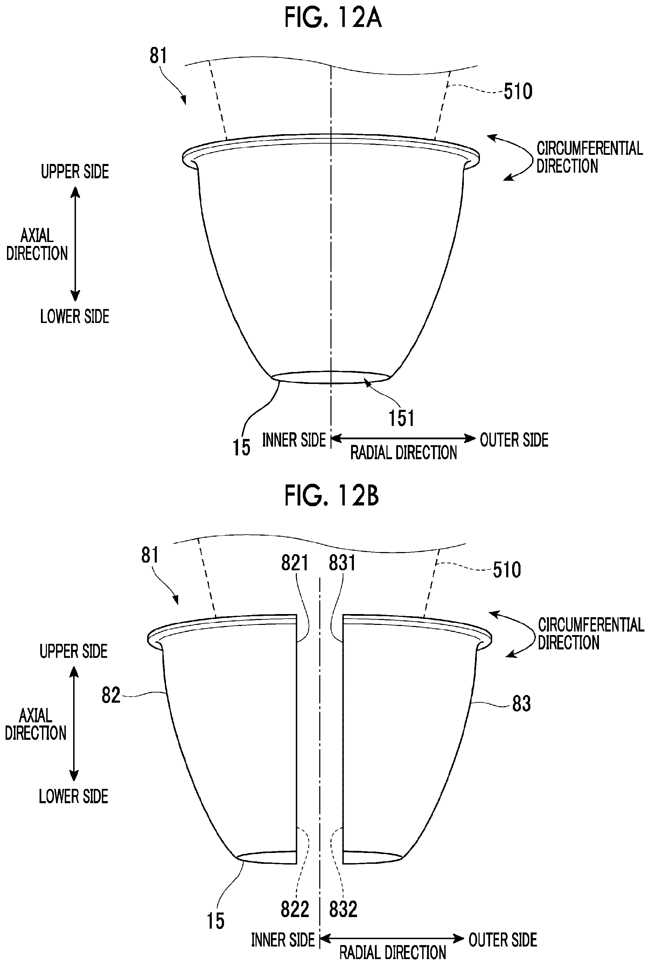

Figs. 12A and 12B are perspective views illustrating examples of a configuration of a chamber 81 that has curved surfaces in the circumferential direction and the axial direction, and that is divided in the radial direction to allow assembly and disassembly.

For example, the cylindrical chamber 81 in Fig. 2 described above has a curved surface in the circumferential direction, and may also have a curved surface in the axial direction. In a case where the shape of the chamber 81 has curved surfaces in the circumferential direction and the axial direction, guidance according to the shape of the bubble that has curved surfaces in the circumferential direction and the axial direction can be performed.

Fig. 12A is a perspective view illustrating an example of an external configuration of the chamber 81 having curved surfaces in the circumferential direction and the axial direction. The chamber 81 in Fig. 12A has curved surfaces in the circumferential direction and the axial direction, and has a pot-like shape of which a width is gradually widened from the lower side to the upper side in the axial direction. A circular hole 151 that is open in the radial direction is formed in the lower end portion 15 of the chamber 81. The hole 151 is a hole for allowing the bubble 510 and the cooling air to pass through. The lower end portion 15 is joined to the rotation member 52 (for example, refer to Fig. 3). Accordingly, the chamber 81 can rotate or reciprocate in the circumferential direction.

Fig. 12B is a perspective view illustrating an example of the external configuration when the chamber 81 of Fig. 12A is disassembled into two parts in the radial direction. As illustrated in Fig. 12B, the chamber 81 can be disassembled into a member 82 and a member 83, and can be used as the chamber 81 by assembling the disassembled member 82 and member 83. Specifically, the chamber 81 can be assembled by joining a surface 821 of the member 82 and a surface 831 of the member 83 and joining a surface 822 of the member 82 and a surface 832 of the member 83. In a case where the shape of the chamber 81 has a curved surface in the axial direction, guidance according to the shape of the bubble that has a curved surface in the axial direction can be performed. Therefore, in order to form a curved surface on the inner side in the radial direction, it is no longer necessary to dispose a plurality of cylindrical members, which have different heights in the axial direction, in the radial direction as in the case in the related art.

Since the chamber 81 of Fig. 12A can be divided in the radial direction to allow assembly and disassembly, the removal and attachment of the inflation molding device 1 in the radial direction is facilitated. As a result, the chamber 81 can be replaced or adjusted without stopping molding and removing the bubble 510 from the inflation molding device 1.

### <Modification Example 3>

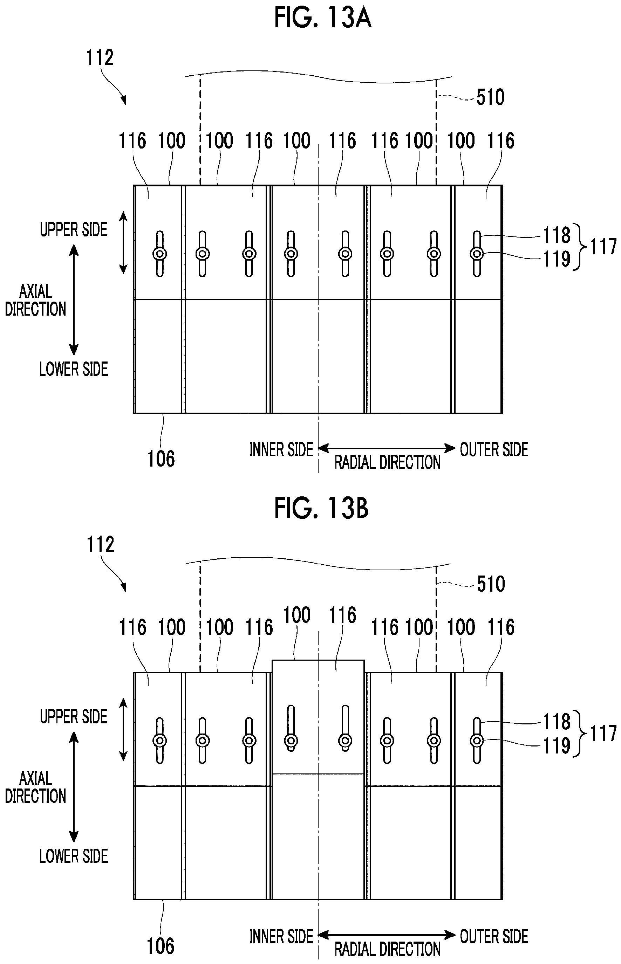

Figs. 13A and 13B are front views illustrating examples of an external configuration of the chamber 112 that has the slide mechanism 117 for adjusting the height in the axial direction.

By providing the slide mechanism 117 for sliding in the axial direction in a substantially cylindrical chamber 112 formed of a plurality of flat plates 100, the height of the chamber 112 in the axial direction can be adjusted for each flat plate 100. Specifically, as illustrated in Fig. 13A, a rectangular thin plate member 116 having the slide mechanism 117 is attached to a portion of the flat plate 100, which is on the upper side in the axial direction and on the outer side in the radial direction, so as to overlap the flat plate 100.

The slide mechanism 117 includes the slide hole 118 as a hole that is long in the axial direction, and the stopper 119 that performs positioning of the thin plate member 116. The stopper 119 is joined to the flat plate 100 disposed on the inner side in the radial direction, via the slide hole 118. The width over which the thin plate member 116 can slide in the axial direction is not particularly limited, and may be, for example, approximately several cm (centimeter) to 20 cm (centimeter). Fig. 13B illustrates an example in which the thin plate member 116 attached to one flat plate 100 among the plurality of flat plates 100 constituting the chamber 112 is slid to the upper side in the axial direction.

In summary, the inflation molding device 1 to which the present invention is applied only needs to have the following configuration, and can take various embodiments.

That is, the inflation molding device 1 to which the present invention is applied includes a blowing portion (for example, air ring 20 of Fig. 1) that blows cooling air 610 for solidifying a bubble 510 formed by expansion of a molten resin 500 extruded in a cylindrical shape from a die 30; and a guiding portion (for example, chambers 11-1 to 11-n of Fig. 1) that is disposed to surround the bubble 510, and guides the cooling air 610 from the blowing portion to the bubble 510, in which the guiding portion is divided into a plurality of members in a circumferential direction, and rotates or reciprocates in the circumferential direction.

In a case where the guiding portion rotates or reciprocates in the circumferential direction, the wind speed of the cooling air from the blowing portion is made uniform in the circumferential direction, so that the film thickness of the bubble 510 becomes uniform. Accordingly, since even a member with a non-uniform shape in the circumferential direction, such as the guiding portion having a divided structure, can be used, the time and labor required for replacing or adjusting the guiding portion can be reduced.

Here, a surface of each of the plurality of members of the guiding portion, which faces the bubble 510, may include a curved surface in the circumferential direction (for example, members 12 and 13 of Fig. 2).

Since the surface of each of the plurality of members of the guiding portion, which faces the bubble 510, includes curved surfaces in the circumferential direction, the guiding portion can be a cylindrical chamber by being disassembled in the radial direction and assembled. Accordingly, the removal and attachment in the radial direction is facilitated.

Further, a surface of each of the plurality of members of the guiding portion, which faces the bubble, may be a flat surface (for example, flat plate 100 of Figs. 5A to 5C).

In a case where the plurality of members, of which the surfaces facing the bubble are flat surfaces, rotate or reciprocate in the circumferential direction, the wind speed of the cooling air from the blowing portion is made uniform in the circumferential direction, so that the film thickness of the bubble becomes uniform. For the flat plate, since it is easier to procure and process materials than manufacturing a wall having a curved surface, the time and labor required for manufacturing the guiding portion can be reduced.

Further, the plurality of members of the guiding portion may be a plurality of flat plates, and a widest surface of each of the plurality of flat plates (for example, surfaces 401 and 402 of Fig. 8B) may be perpendicular to the circumferential direction.

Since the widest surface of each of the plurality of flat plates, which are the plurality of members of the guiding portion, is perpendicular to the circumferential direction, in a case where the guiding portion rotates or reciprocates, the cooling air from the blowing portion is discharged outward in the radial direction from between the flat plates. As a result, the effect of cooling the bubble 510 and the effect of guiding the bubble 510 toward the guiding portion are improved.

Further, each of the plurality of members of the guiding portion may include a curved surface in an axial direction on a surface facing the bubble 510 (for example, members 82 and 83 of Figs. 12A and 12B).

In a case where the shape of the surface of the plurality of members of the guiding portion, which faces the bubble 510, has a curved surface in the axial direction, guidance according to the shape of the bubble 510 that has a curved surface in the axial direction can be performed.

Further, the plurality of members of the guiding portion may be divided in an axial direction (for example, chamber 11 of Fig. 11).

Since the plurality of members of the guiding portion are divided in the axial direction, the height of the guiding portion in the axial direction can be adjusted. Accordingly, the time and labor required for adjusting the guiding portion can be reduced.

Further, one or more members (for example, flat plate 100 of Figs. 6A and 6B) among the plurality of members of the guiding portion may include a mechanism (for example, slide mechanism 117) that moves in a radial direction.

Since one or more members among the plurality of members of the guiding portion can be slid in the radial direction, the distance between the guiding portion and the bubble can be adjusted.

Further, each of the plurality of members of the guiding portion may include a curved surface (for example, surface 403 of Fig. 8B) in an axial direction.

Since each of the plurality of members of the guiding portion includes a curved surface in the axial direction, the bubble 510 can be guided according to the shape of the curved surface.

A mechanism (for example, slide mechanism 117) that moves some of the members (for example, thin plate member 116 of Figs. 13A and 13B) further divided in the axial direction, in the axial direction may be further provided.

Since some of the members further divided in the axial direction can be moved in the axial direction, the height of the guiding portion in the axial direction can be adjusted for each member.

A rotation portion (for example, rotation mechanism 50 of Fig. 3) that includes a rotation member 52 that supports the guiding portion, and causes the guiding portion to rotate or reciprocate in the circumferential direction may be further provided.

Since the guiding portion is caused to rotate or reciprocate in the circumferential direction by the rotation portion, the cooling air from the blowing portion is made uniform in the circumferential direction. As a result, the film thickness of the bubble 510 is made uniform.

Further, the rotation portion may include one or more drive mechanisms 51 that are in contact with an edge portion of the rotation member 52 and rotate the rotation member 52.

Since the drive mechanism 51 that rotates the rotation member 52 is provided, it is possible to control the speed at which the rotation member 52 rotates the guiding portion, the width of the reciprocating motion, and the like.

Further, the rotation member 52 may be provided with an outlet (for example, outlet 54 of Fig. 9) through which at least some of the cooling air 610 is blown out from the blowing portion.

Since the rotation member 52 is provided with the outlet through which at least some of the cooling air 610 is blown out, the position from which the cooling air 610 is blown out can be controlled.

### <Other Embodiments>

Although the embodiments of the present invention have been described above, the present invention is not limited to the embodiments described above. For example, the various configurations illustrated in Figs. 1 to 13B are merely examples for achieving the object of the present invention, and are not particularly limited. Further, the effects of the present invention are not limited to those described in the embodiments described above.

Further, in the embodiments described above, it is illustrated that the chamber can be disassembled and assembled, and the chamber can rotate or reciprocate in the circumferential direction. However, for example, the chamber itself may have the following functions. That is, the chamber may be provided with a detection mechanism that detects information for identifying the molding state of the bubble. In this case, the "information for identifying the molding state of the bubble" includes, for example, a wind speed, a wind pressure, and a temperature of the cooling air, and a distance from the chamber to the bubble. Further, examples of the "detection mechanism" include various sensors such as a wind speed sensor, a pressure gauge, a wind temperature sensor, and an ultrasonic displacement meter. By detecting the information for identifying the molding state of the bubble in the chamber, it is possible to control the molding state of the bubble based on the detected information.

Further, in the embodiments described above, an example has been illustrated in which all the chambers constituting the inflation molding device are divided, but for example, a configuration may be adopted in which chambers that are frequently removed or adjusted in position are divided and assembled.

Further, in the embodiments described above, an example has been illustrated in which all the chambers constituting the inflation molding device rotate or reciprocate in the circumferential direction, but only some chambers may rotate or reciprocate. For example, only the chambers configured to be divided and assembled may rotate or reciprocate.

Further, the chamber may be provided with an adsorption mechanism that adsorbs the bubble. Accordingly, since the chamber adsorbs the bubble, the tension of the bubble can be increased, and the molding can be stabilized. Examples of the "adsorption mechanism" include an actuator and the like.

Further, the chamber may be provided with a temperature adjustment mechanism that heats or cools the bubble. Accordingly, since the chamber heats or cools the bubble, it is possible to improve the strength, adjust the transparency, improve the uniformity of the film thickness, and improve the cooling capacity by adjusting the temperature of the bubble.

Further, the slide mechanism 117 in Figs. 6A to 7B, 13A, and 13B is provided on each of all the plurality of flat plates constituting the chamber, but the present invention is not limited thereto. The slide mechanism 117 may be provided on one or more flat plates among the plurality of flat plates constituting the chamber.

Further, the surface of each of the flat plates 200 illustrated in Fig. 6A and each of the flat plates 100 illustrated in Fig. 7A, which faces the bubble 510, is a flat surface, but may have a curved surface in the circumferential direction. Accordingly, the curved surface can be made to match the curved surface of the bubble 510, and thus, the uniformity of the cooling air in the circumferential direction can be improved.

Further, since the plurality of flat plates 100 are disposed so that the overall shape of the chamber 112 illustrated in Figs. 13A and 13B is approximately cylindrical, the shape seen from the front is rectangular, but the present invention is not limited thereto. For example, the plurality of flat plates 100 may be disposed so that the overall shape becomes wider in the axial direction. In this case, since the distance in the radial direction from the center is increased as it goes upward in the axial direction, the shape of the chamber 112 when viewed from the front becomes a trapezoid.

### Brief Description of the Reference Symbols

1, 5, 6: inflation molding device
11, 81, 112, 113, 114, 115: chamber
20: air ring
30: die
40: extrusion device
50, 70: rotation mechanism
51, 71: drive mechanism
52, 72: rotation member
60: motor
100: flat plate
510: bubble
610: cooling air

## Claims

1. An inflation molding device (1, 5, 6) comprising:
a blowing portion (20) that blows cooling air (610) for solidifying a bubble (510) formed by expansion of a molten resin (500) extruded in a cylindrical shape from a die (30); and
a guiding portion (11, 81, 112, 113, 114, 115) that is disposed to surround the bubble (510), and guides the cooling air (610) from the blowing portion (20) to the bubble (510),
wherein the guiding portion (11, 81, 112, 113, 114, 115) is divided into a plurality of members (12, 13, 82, 83, 100, 400) in a circumferential direction, and rotates or reciprocates in the circumferential direction.

2. The inflation molding device (1, 5, 6) according to claim 1,
wherein a surface of each of the plurality of members (12, 13, 82, 83, 100, 400) of the guiding portion (11, 81, 112, 113, 114, 115), which faces the bubble (510), includes a curved surface in the circumferential direction.

3. The inflation molding device (1, 5, 6) according to claim 1,
wherein a surface of each of the plurality of members (12, 13, 82, 83, 100, 400) of the guiding portion (11, 81, 112, 113, 114, 115), which faces the bubble (510), is a flat surface.

4. The inflation molding device (1, 5, 6) according to claim 1,
wherein the plurality of members (12, 13, 82, 83, 100, 400) of the guiding portion (11, 81, 112, 113, 114, 115) are a plurality of flat plates, and a widest surface (401, 402) of each of the plurality of flat plates is perpendicular to the circumferential direction.

5. The inflation molding device (1, 5, 6) according to claim 2 or 4,
wherein each of the plurality of members (12, 13, 82, 83, 100, 400) of the guiding portion (11, 81, 112, 113, 114, 115) includes a curved surface in an axial direction on a surface facing the bubble (510).

6. The inflation molding device (1, 5, 6) according to any one of claims 1 to 4,
wherein the plurality of members (12, 13, 82, 83, 100, 400) of the guiding portion (11, 81, 112, 113, 114, 115) are divided in an axial direction.

7. The inflation molding device (1, 5, 6) according to any one of claims 1 to 4,
wherein one or more members among the plurality of members (12, 13, 82, 83, 100, 400) include a mechanism (117) that moves in a radial direction.

8. The inflation molding device (1, 5, 6) according to any one of claims 1 to 4,
wherein each of the plurality of members (12, 13, 82, 83, 100, 400) of the guiding portion (11, 81, 112, 113, 114, 115) includes a curved surface in an axial direction.

9. The inflation molding device (1, 5, 6) according to claim 6, further comprising:
a mechanism (117) that moves some of the members further divided in the axial direction, in the axial direction.

10. The inflation molding device (1, 5, 6) according to any one of claims 1 to 4, further comprising:
a rotation portion (50, 70) that includes a rotation member (52, 72) that supports the guiding portion (11, 81, 112, 113, 114, 115), and causes the guiding portion (11, 81, 112, 113, 114, 115) to rotate or reciprocate in the circumferential direction.

11. The inflation molding device (1, 5, 6) according to claim 10,
wherein the rotation portion (50, 70) includes one or more drive mechanisms (51, 71) that are in contact with an edge portion of the rotation member (52, 72) and rotate the rotation member (52, 72).

12. The inflation molding device (1, 5, 6) according to claim 11,
wherein the rotation member (52, 72) is provided with an outlet (54) through which at least some of the cooling air (610) is blown out from the blowing portion (20).
